# EUROPEAN PATENT SPECIFICATION

(11) **EP 4 395 374 B1**
(45) Date of publication and mention of the grant of the patent: **26.11.2025**
(21) Application number: 21958679.9
(22) Date of filing: 28.09.2021
(51) Int. Cl.: H04W 4/40, H04W 72/04, H04W 72/40, H04W 88/04, H04W 72/25, H04W 76/14, H04W 92/18

(54) **WIRELESS COMMUNICATION METHOD, TERMINAL DEVICE, AND NETWORK DEVICE**
DRAHTLOSKOMMUNIKATIONSVERFAHREN, ENDGERÄTEVORRICHTUNG UND NETZWERKVORRICHTUNG
PROCÉDÉ DE COMMUNICATION SANS FIL, DISPOSITIF TERMINAL ET DISPOSITIF DE RÉSEAU

(43) Date of publication of application: 03.07.2024
(73) Proprietor: GUANGDONG OPPO MOBILE TELECOMMUNICATIONS CORP., LTD., Dongguan, Guangdong 523860 (CN)
(72) Inventor: ZHANG, Boyuan, Dongguan, Guangdong 523860 (CN); LU, Qianxi, Dongguan, Guangdong 523860 (CN); LENG, Bingxue, Dongguan, Guangdong 523860 (CN)
(74) Representative: Taor, Simon Edward William
(86) International application number: PCT/CN2021/121414
(87) International publication number: WO 2023/050084

(56) References cited:
- WO-A1-2018/031343
- WO-A1-2021/109470
- WO-A1-2021/155839
- WO-A1-2022/022550
- CN-A- 108 307 472
- CN-A- 110 574 476
- US-A1- 2018 098 370
- "3rd Generation Partnership Project; Technical Specification Group Radio Access Network; NR; Radio Resource Control (RRC) protocol specification (Release 16)", vol. RAN WG2, no. V16.0.0, 6 April 2020 (2020-04-06), pages 1 - 835, XP051893854, Retrieved from the Internet <URL:ftp://ftp.3gpp.org/Specs/archive/38_series/38.331/38331-g00.zip 38331-g00.docx> [retrieved on 20200406]
- OPPO, ZTE: "Support of default power control parameter per TRP", 3GPP DRAFT; R1-2107212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210816 - 20210827, 6 August 2021 (2021-08-06), Mobile Competence Centre ; 650, route des Lucioles ; F-06921 Sophia-Antipolis Cedex ; France , XP052033492

## Description

### TECHNICAL FIELD

The embodiments of the present disclosure relate to the communication field, and in particular, to methods for wireless communication, a terminal device and a network device.

### BACKGROUND

The internet of vehicles system uses the manner of terminal to terminal direct communication, that is, the Device to Device (D2D) communication. In the 3rd Generation Partnership Project (3GPP), two transmission modes, i.e., the first mode and the second mode are defined. In the first mode, the transmission resource of the terminal device may be allocated by the network device, and in the second mode, the terminal device selects a resource in the resource pool to transmit data. When using the first mode for data transmission, the terminal device can report the information of sidelink terminal (SidelinkUEInformation) to the network device, and the configuration of the transmission resource corresponding to the Sidelink service can be obtained through the information of sidelink terminal. In addition, the configuration of the corresponding Radio Bear (RB) can be obtained by the terminal device reporting the information of sidelink terminal.

However, at present, there is still a scenario in which the remote terminal performs data transmission with the network device through the relay terminal, which relates to the relay service. That is, in the data transmission service between the remote terminal and the network device through the relay terminal, how to obtain the configuration of the RB and/or the transmission resource corresponding to the relay service is a technical problem to be solved urgently in the present disclosure. Related technologies can be found in patent documents US 2018/098370 A1 and WO 2021/155839 A1. US 2018/098370 A1 relates to technology for a relay user equipment (UE) operable to act as a relay between a remote UE and an eNodeB. The relay UE can receive, from the eNodeB, a relay configuration message that includes one or more relay configuration parameters. The relay UE can identify relay UE information associated with one or more relay parameters of the relay UE. The relay UE can determine to act as the relay for the remote UE based on the one or more relay configuration parameters and the relay UE information. The relay UE can transmit a discovery message to the remote UE in order to establish a direct connection between the relay UE and the remote UE. WO 2021/155839 A1 relates to method for path switch with service continuity for the UE from the indirect relay link to direct cell link or vice versa. the UE is configured with measurement report configuration, which includes triggering event for sending the measurement report. The network sends path switch command to the UE to initiate the path switch based on the measueement report. The UE path switch includes intra-gNB and inter-gNB path switch between the indirect relay link and the direct cellular link. WO 2018/031343 A1 relates to cellular communications, and in particular to a layer 2 relay of data from a remote UE through a relay UE.

### SUMMARY

The invention is set out in the appended claims.

### BRIEF DESCRIPTION OF THE DRAWINGS

FIG. 1A is a schematic diagram of the first mode provided by the present disclosure.
FIG. 1B is a schematic diagram of the second mode provided by the present disclosure.
FIG. 2 is a diagram of an application scenario provided by the embodiments of the present disclosure.
FIG. 3 is a flowchart of a method for wireless communication provided by the embodiments of the present disclosure.
FIG. 4 illustrates a schematic block diagram of a terminal device 400 according to the embodiments of the present disclosure.
FIG. 5 illustrates a schematic block diagram of a network device 500 according to the embodiments of the present disclosure.
FIG. 6 is a schematic structural diagram of a communication device 600 provided by the embodiments of the present disclosure.
FIG. 7 is a schematic structural diagram of an apparatus according to the embodiments of the present disclosure.

### DETAILED DESCRIPTION

The technical solutions of the embodiments of the present disclosure will be described below in combination with the drawings in the embodiments of the present disclosure. It will be obvious that the described embodiments are part of the embodiments of the present disclosure, but not all of them. With respect to the embodiments in the present disclosure, all other embodiments obtained by those of ordinary skill in the art without making creative efforts fall within the scope of protection of the present disclosure.

Before introducing the technical solutions of the present disclosure, the relevant knowledge of the technical solutions of the present disclosure will be described below.

### 1. Device to Device (D2D)/Vehicle to Everything (V2X)

The D2D communication is a sidelink transmission technology based on the D2D, which is different from the manner of receiving or transmitting the combination data through the network device in the traditional cellular system, so it has higher spectrum efficiency and lower transmission delay. The internet of vehicles system uses the manner of terminal to terminal direct communication, that is, the above D2D communication. In the 3GPP, two transmission modes, i.e., the first mode and the second mode are defined.

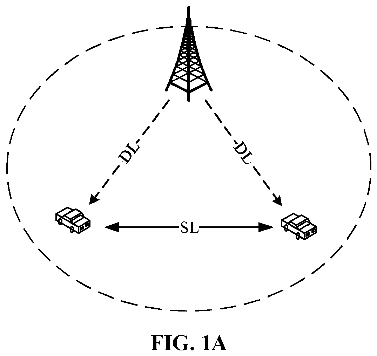

In the first mode, the transmission resource of the terminal device is allocated by the network device, and the terminal device transmits data on the sidelink according to the resource allocated by the network device. The network device may allocate a resource to the terminal device for one time of transmission, and may also allocate the resources to the terminal device for a semi-static transmission. As illustrated in FIG. 1A, the terminal device is located within the network coverage area, and the network device allocates transmission resource to the terminal device for the sidelink transmission.

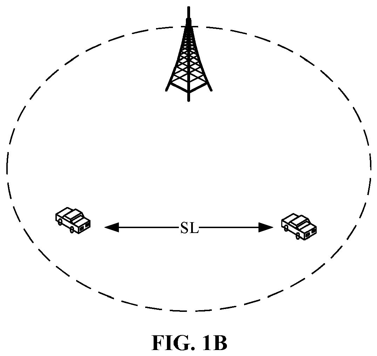

In the second mode, as illustrated in FIG. 1B, the terminal device selects a resource in a resource pool for data transmission. Specifically, the terminal device may select a transmission resource in the resource pool by monitoring, or may randomly select the transmission resource in the resource pool.

It should be understood that the terminal or the terminal device in the embodiments of the present disclosure may also be referred to as a User Equipment (UE), an access terminal, a subscriber unit, a subscriber station, a mobile station, a mobile stage, a remote station, a remote terminal, a mobile device, a user terminal, a terminal, a wireless communication device, a user agent or a user device, etc. The terminal may be a STAION (ST) in a Wireless Local Area Networks (WLAN), a cellular telephone, a cordless telephone, a Session Initiation Protocol (SIP) telephone, a Wireless Local Loop (WLL) station, a Personal Digital Processing (PDA) device, a handheld device with wireless communication function, a computing device or other processing device connected to a wireless modem, a vehicle-mounted device, a wearable device, and a terminal in a next generation communication system, such as a New Radio (NR) network or a terminal in a future evolved Public Land Mobile Network (PLMN).

By way of example and not limitation, in embodiments of the present disclosure, the terminal device may also be a wearable device. The wearable device may also be called a wearable intelligent device, which is the general name of wearable devices developed by applying wearable technology to intelligently design daily wear, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices have characteristics of full functions, large size and realizing complete or partial functions without relying on smart phones, such as a smart watch or smart glasses, and a device that only focus on certain application functions and needs to be used in combination with other devices, such as smart phones, for example, various smart bracelets for monitoring physical signs and smart jewelries.

It should be understood that the network device illustrated in FIG. 1A may be a device for communicating with a mobile device, and the network device may be an Access Point (AP) in a WLAN, a Base Transceiver Station (BTS) in a Global System of Mobile communication (GSM) or Code Division Multiple Access (CDMA), a NodeB (NB) in a Wideband Code Division Multiple Access (WCDMA), an Evolutional Node B (eNB or eNodeB) in a Long Term Evolution (LTE) system, or a relay station or an AP, or a vehicle-mounted device, a wearable device, a network device or a base station (gNB) in an NR network, or a network device in a future evolved PLMN network, etc.

### 2. Report of sidelink UE information

It should be understood that a terminal device in a Radio Resource Control (RRC) connection and capable of performing sidelink communication may report sidelink UE information, and configuration of the RB and transmission resource may be obtained by such kind of terminal devices through reporting the sidelink UE information.

The sidelink UE information may include, but is not limited to, the following cells:
- sl-TxResourceReqList: the terminal device needs to perform report of service attributes in the list for the resource requirements of the destination addresses corresponding to the current different sidelink services;
- sl-DestinationIdentity: the identity (ID) of the destination address corresponding to the sidelink service is reported;
- sl-CastType: the transmassion type, such as unicast, multicast or broadcast type, corresponding to the destination address is reported;
- sl-RLC-ModeIndication: the Radio Link Control (RLC) modes corresponding to different Quality of Service (QoS) data flows, which correspond to the destination addresses, are reported;
- sl-QoS-InfoList: the information of different QoS flows corresponding to the destination addresses is reported;
- sl-InterestedFreqList: the information of interested frequency points corresponding to the destination addresses is reported;
- sl-TypeTxSyncList: the types of synchronization references available for the interested frequency points of the destination addresses are reported; and
- sl-CapabilityInformationSidelink: capability information related to sidelink is reported.

At present, the terminal device may report the sidelink UE information in any one of the following cases:
the terminal device successfully establishes a connection or restores the sidelink with the peer device;
an interest of the terminal device is changed;
a QoS profile of the terminal device is changed;
the peer device of the terminal device receives the capability information of the peer device (UECapabilityInformationSidelink);
the peer device of the terminal device updates the RLC mode;
a System Information Block (SIB) used for providing a sidelink configuration is changed, for example, the SIB12 providing the sidelink configuration is changed;
a failure is occurred in the sidelink; or
a RRC reconfiguration failure is occurred in the sidelink.

It should be understood that the sidelink service refers to the service on the sidelink.

It should be understood that the above destination address is a concept of the Access Stratum (AS). It corresponds to the sidelink service, and at the AS, the destination address may be understood to be the sidelink service.

It should be understood that the interest of the terminal device being changed may be understood as the destination address corresponding to the sidelink service of the terminal device being changed, for example, a destination address is increased, a destination address is decreased or a certain destination address is updated.

It should be understood that the QoS profile of the terminal device being changed may be understood as the information of the QoS flow of the terminal device being changed, for example, the QoS flow of a certain destination address being changed, or the RLC mode of a certain QoS flow being changed, etc.

### 3. Report of Buffer Status Report (BSR)

The terminal device may serialize the destination addresses and the information of interested frequency points of the destination addresses to obtain indexes of the destination addresses. That is, the serialized indexes of the destination addresses may indicate the IDs of the destination addresses and the two-dimensional information of the frequency points. For example, for sl-InterestedFreqList {f1, f2, f3} in destination ID=0, after serialization by the terminal device, destination index=0 corresponds to {destination ID=0, f1}, destination index=1 corresponds to {destination ID=0, f2}, and destination index=2 corresponds to {destination ID=0, f3}.

When the terminal device needs to request a transmission resource at a certain frequency point for a certain destination address, the terminal device may report a BSR to the network device. The BSR includes the destination address requested by the terminal device and the index of the destination address corresponding to the frequency point.

The following describes the application scenario related to the technical solutions of the present disclosure.

As described above, at present, there is still a scenario in which a remote terminal performs data transmission with a network device through a relay terminal, which relates to the relay service. That is, a data transmission service between the remote terminal and the network device is performed through the relay terminal. In fact, the relay service is an uplink and downlink service between the remote terminal and the network device realized through the relay terminal.

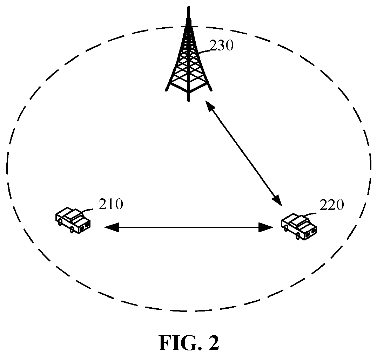

Exemplarily, FIG. 2 is a diagram of an application scenario provided by the embodiments of the present disclosure. As illustrated in FIG. 2, the application scenario may involve a remote terminal 210, a relay terminal 220, and a network device 230. The relay terminal 220 is taken as a relay between the remote terminal 210 and the network device 230 to implement data transmission between the remote terminal 210 and the network device 230. The network device 230 may provide communication coverage for a particular geographic area and may communicate with the terminal device located within the coverage area.

It should be understood that in this application scenario, the above first mode may be used, that is, the transmission resources of the remote terminal and the relay terminal are allocated by the network device.

FIG. 2 exemplarily illustrates a network device, a remote terminal, and a relay terminal. Alternatively, the application scenario may also involve multiple network devices, and the coverage area of each network device may include other numbers of terminal devices, which are not limited by embodiments of the present disclosure.

It should be understood that in the embodiments of the present disclosure, a device having a communication function in a network/system may be referred to as a communication device. Taking the application scenario illustrated in FIG. 2 as an example, the communication device may include the remote terminal 210, the relay terminal 220 and the network device 230 that have a communication function. The remote terminal 210 and the relay terminal 220 are actually terminal devices, and the terminal devices and the network device may be the specific devices described above and will not be described here. The communication device may also include other devices, such as a network controller, a mobility management entity and other network entities, which are not limited in embodiments of the present disclosure.

The technical solutions of the present disclosure will be described in detail below.

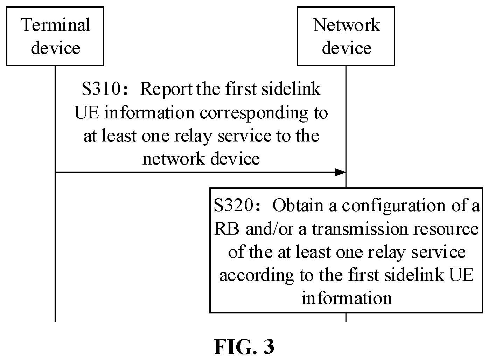

FIG. 3 is a flowchart of a method for wireless communication provided by the embodiments of the present disclosure. The execution body of the method may include a terminal device and a network device. For example, the terminal device may be a remote terminal 210 or a relay terminal 220 in FIG. 2, and the network device may be a network device 230 in FIG. 2, which is not limited by the present disclosure. As illustrated in FIG. 3, the method includes the following operations.

In operation S310, the terminal device reports the first sidelink UE information corresponding to at least one relay service to the network device.

In operation S320, the network device obtains a configuration of a RB and/or a transmission resource of the at least one relay service according to the first sidelink UE information.

In some implementations, the first sidelink UE information includes, but is not limited to, at least one of the following:
(1) an ID of the destination address corresponding to the first sidelink UE information;
(2) a relay type of each of the at least one relay service;
(3) a type of the terminal device;
(4)an interested frequency point list of the destination address corresponding to the first sidelink UE information; or
(5) a list of synchronization reference information of each frequency point in the above frequency point list.

It should be understood that in the embodiments of the present disclosure, the sidelink is also referred to as a direct link, which is not limited in the present disclosure.

It should be understood that the destination address corresponding to the first sidelink UE information may be understood based on the following content. Since the first sidelink UE information is the information of sidelink terminal corresponding to at least one relay service, the destination address is a concept of the AS, and the destination address corresponds to the relay service, the first sidelink UE information and the destination address have a corresponding relationship.

It should be understood that the first sidelink UE information may correspond to one or more destination addresses, which is not limited by the present disclosure.

In some implementable ways, the ID of the destination address is the ID of the peer terminal of the above terminal device. For example, if the above terminal device is a remote terminal, the ID of the peer terminal refers to the ID of the relay terminal, and if the above terminal device is a relay terminal, the ID of the peer terminal refers to the ID of the remote terminal.

In some implementations, the ID of the peer terminal is, but is not limited to, any one of the following: a Source ID of the peer terminal, a temporary ID of the peer terminal, or a Cell-Radio Network Temporary Identifier (C-RNTI) of the peer terminal.

In some implementations, the relay type for each relay service is a layer 2 relay type or a layer 3 relay type.

It should be understood that the layer 2 in the wireless protocol stack includes a Media Access Control (MAC) layer, a Packet Data Convergence Protocol (PDCP) layer, and an RLC layer, and the layer 3 in the radio protocol stack includes a RRC layer and a Non-Access Stratum (NAS).

In some implementations, the type of terminal device is a remote terminal or a relay terminal.

It should be understood that the interested frequency point list of the destination address refers to a list of frequency points available to the destination address. The terminal device may request a transmission resource required by the destination address at these frequency points.

It should be understood that the list of synchronization reference information of various frequency points refers to synchronization reference parameter or the like associated with these frequency points, which is not limited in the present disclosure.

In some implementations, the first sidelink UE information further includes, but is not limited to, at least one of the following:
(6) hop count; or
(7) the type of the relay service;

In some implementations, if the terminal device is a remote terminal, the hop count may be the hop count between the remote terminal and the network device, or the hop count between the remote terminal and other devices, which is not limited in the present disclosure.

In some implementations, if the terminal device is a relay terminal, the hop count is the hop count between the relay terminal and the network device, which is not limited in the present disclosure.

In some implementations, the type of the relay service may be a type of terminal to terminal relay (UE to UE relay) or a type of terminal to network device relay (UE to Network relay). For example, the type of relay illustrated in FIG. 2 is a type of terminal to network device relay.

In some implementations, for the layer 2 relay, when the relay terminal is in an RRC connection state and the remote terminal is in an RRC idle state, the relay terminal may assist the remote terminal to monitor a paging message and forward the paging message to the remote terminal. Therefore, the remote terminal may transmit the ID of the remote terminal to the relay terminal by any of the following signaling or information, but is not limited thereto: a RRC signaling, a Medium Access Control Control Element (MAC CE), or Sidelink Control Information (SCI). Based on this, when the relay terminal is configured with a common search space for detecting a paging message of the remote terminal, the first sidelink UE information may further include an ID of the remote terminal. Conversely, when the relay terminal is not configured with the common search space for detecting the paging message of the remote terminal, the first sidelink UE information does not include the ID of the remote terminal.

In some implementations, the ID of the remote terminal includes a 5G-Serving-Temporary Mobile Subscriber Identity (S-TMSI) and/or an Inactive-Radio Network Temporary Identifier (I-RNTI) of the remote terminal.

Alternatively, the terminal device may report the first sidelink UE information corresponding to the at least one relay service to the network device by using any of the following implementable manners, but is not limited to this.

In the first implementation, in a case that the terminal device is a remote terminal and the remote terminal meets the first condition, the terminal device reports the first sidelink UE information to the network device. The first condition includes any one of the following.
The remote terminal receives in a layer 2 relay a RRC reconfiguration message forwarded by the relay terminal.
The remote terminal establishes in a layer 3 relay a connection with a relay terminal.

In the second implementation, in a case that the terminal device is the relay terminal and the relay terminal meets the second condition, the terminal device reports the first sidelink UE information to the network device. The second condition includes any one of the following.
The relay terminal receives a sidelink request transmitted by the remote terminal, the sidelink request being configured to request an establishment of a sidelink between the remote terminal and the relay terminal.
The relay terminal receives in a layer 2 relay an indication message transmitted by the network device, the indication message being configured to instruct the relay terminal to process the at least one relay service.

In the third implementation, in a case that the third condition is met, the terminal device reports the first sidelink UE information to the network device. The third condition includes any one of the following.
(1) A link between the remote terminal and the network device is switched from an air interface link to a relay link relayed through the relay terminal.
(2) A sidelink between the terminal device and a peer terminal is established successfully.
(3) A sidelink between the terminal device and a peer terminal is resumed.
(4) An interest of the terminal device is changed.
(5) Information of a QoS flow corresponding to a relay service in the at least one relay service is changed.
(6) Capability information of a peer terminal is received from the peer terminal.
(7) A RLC mode of the peer terminal is changed.
(8) A SIB used for providing a sidelink configuration is changed. For example, the SIB 12 providing the sidelink configuration is changed.
(9) A failure is occurred in a sidelink.
(10) A RRC reconfiguration failure is occurred in a sidelink.

The above first implementation is explained as follows.

In some implementations, the above RRC reconfiguration message may be transmitted by the network device in the following scenario, but is not limited thereto. The link between the remote terminal and the network device is switched from an air interface link to a relay link relayed through the relay terminal, which results in the RRC connection on the relay link needs to be reconfigured The relay link needs to be reestablished, which results in the RRC connection on the relay link needing to be reconfigured, etc.

In some implementations, the remote terminal establishes in the layer 3 relay a connection with the relay terminal, and the connection may be an initially established connection or a reestablished connection, which is not limited in the present disclosure.

The above second implementation is explained as follows.

It should be understood that typically, the remote terminal may select a relay terminal to process its own relay service and further the remote terminal may transmit a sidelink request to the selected relay terminal.

It should be understood that the relay terminal is controlled by the network device to process the relay service when the relay terminal is in the layer 2 relay. Therefore, the above indication message may also be understood as a control message for controlling the relay terminal to process the at least one relay service.

The above third implementation is explained as follows.

It should be understood that the sidelink between the terminal device and the peer terminal being established successfully may be understood as the sidelink between the terminal device and the peer terminal being initial established successfully.

It should be understood that the interest of the terminal device being changed may be understood as the destination address corresponding to the relay service of the terminal device being changed. For example, a destination address is added, a destination address is deleted or a certain destination address is updated.

It should be understood that the information of the QoS flow corresponding to a certain relay service being changed may be understood as the RLC mode of the QoS flow corresponding to the relay service being changed, and/or other information of the QoS flow corresponding to the relay service being changed, which is not limited in the present disclosure.

It should be understood that the terminal device may serialize the destination addresses and the information of interested frequency points of the destination addresses to obtain indexes of the destination addresses. That is, the serialized indexes of the destination addresses may indicate the IDs of the destination addresses and the two-dimensional information of the frequency points. When the terminal device needs to request a transmission resource at a certain frequency point for a certain destination address, the terminal device may report a BSR to the network device. The BSR includes the second destination address requested by the terminal device and an index of the second destination address corresponding to the frequency point. At present, there are three situations for the terminal device reporting the sidelink UE information:

In the first situation, the terminal device only reports the first sidelink UE information.

In the second situation, the terminal device only reports the second sidelink UE information. The second sidelink UE information is the sidelink UE information corresponding to the sidelink service, and is used for obtaining the configuration of the RB and/or the transmission resource of the sidelink service.

In the third situation, the terminal device reports the first sidelink UE information and the second sidelink UE information.

For these three situations, the terminal device and the network device need to use a uniform serialization rule for the index of at least one destination address.

It is assumed that the addresses corresponding to the first sidelink UE information and the second sidelink UE information constitute at least one first destination address, both the terminal device and the network device may determine the index of at least one destination address according to the following preset rules, but is not limited thereto.

In the first implementation, the index of at least one first destination address is determined follow an order of the first sidelink UE information and the second sidelink UE information successively.

In the second implementation, the index of at least one first destination address is determined follow an order of the second sidelink UE information and the first sidelink UE information successively.

In the third implementation, an index of destination address corresponding to the first sidelink UE information is determined according to the first index range, and an index of destination address corresponding to the second sidelink UE information is determined according to the second index range. The first index range is an index range of the destination address corresponding to the first sidelink UE information, and the second index range is an index range of the destination address corresponding to the second sidelink UE information.

In some implementations, the first index range and the second index range are configured by the network device or the first index range and the second index range are predefined, but are not limited thereto.

An exemplary description is given for the first implementation.

Exemplarily, it is assumed that the first sidelink UE information includes two destination addresses, which are destination ID=0 and destination ID=1, respectively. For destination ID=0, the list of the interested frequency points is {f1, f2, f3}, and for destination ID=1, the list of the interested frequency points is {f4, f5}. It is assumed that the second sidelink UE information includes one destination address, which is destination ID=2. For destination ID=2, the list of the interested frequency point is {f6}. After serializing the destination addresses and frequency points according to the first implementation, the obtained indexes of the destination addresses are respectively: destination index=0 corresponding to {destination ID=0, f1}, destination index=1 corresponding to {destination ID=0, f2}, destination index=2 corresponding to {destination ID=0, f3}, destination index=3 corresponding to {destination ID=1, f4}, destination index=4 corresponding to {destination ID=1, f5}, and destination index=5 corresponding to {destination ID=2, f6}.

An exemplary description is given for the second implementation.

Exemplarily, it is assumed that the first sidelink UE information includes two destination addresses, which are destination ID=0 and destination ID=1, respectively. For destination ID=0, the list of the interested frequency points is {f1, f2, f3}, and for destination ID=1, the list of the interested frequency points is {f4, f5}. It is assumed that the second sidelink UE information includes one destination address, which is destination ID=2. For destination ID=2, the list of the interested frequency point is {f6}. After serializing the destination addresses and frequency points according to the second implementation, the obtained indexes of the destination addresses are respectively: destination index=0 corresponding to {destination ID=2, f6}, destination index=1 corresponding to {destination ID=0, f1}, destination index=2 corresponding to {destination ID=0, f2}, destination index=3 corresponding to {destination ID=0, f3}, destination index=4 corresponding to {destination ID=1, f4}, and destination index=5 corresponding to {destination ID=1, f5}.

A description is given for the third implementation.

Exemplarily, it is assumed that the first index range is [00000, 00111] and the second index range is [01000, 11111]. It should be noted that the values in the first index range and the second index range are binary values. It is assumed that the first sidelink UE information includes two destination addresses, which are destination ID=0 and destination ID=1, respectively. For destination ID=0, the list of interested frequency points is {f1, f2, f3}, and for destination ID=1, the list of interested frequency points is {f4, f5}. It is assumed that the second sidelink UE information includes a destination address, which is destination ID=2. For destination ID=2, the list of interested frequency point is {f6}. After serializing the destination addresses and frequency points according to the third implementation, the obtained indexes of the destination addresses are respectively: destination index=00000 corresponding to {destination ID=2, f6}, destination index=00001 corresponding to {destination ID=0, f1}, destination index=00010 corresponding to {destination ID=0, f2}, destination index=00011 corresponding to {destination ID=0, f3}, destination index=00100 corresponding to {destination ID=1, f4}, destination index=01000 corresponding to {destination ID=1, f5}. That is, the indexes of the destination addresses corresponding to the first sidelink UE information start from 00000, and the index of the destination address corresponding to the second sidelink UE information starts from 01000.

As described above, the terminal device may report only the first sidelink UE information, and may also report the first sidelink UE information and the second sidelink UE information. In this case, the first sidelink UE information may be reported independently. For example, the first sidelink UE information may be reported by the terminal device in the following form.

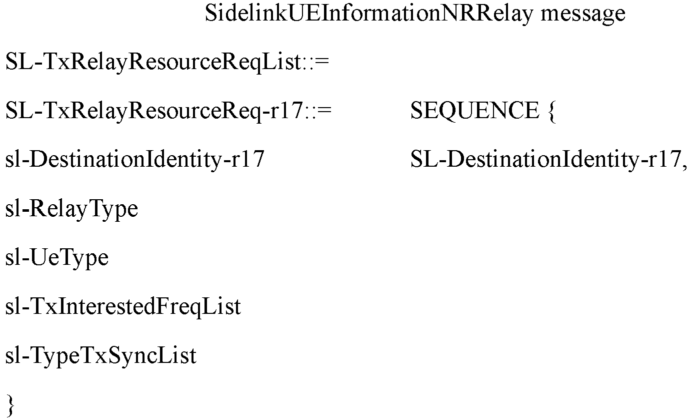

SL-TxRelayResourceReq represents the first sidelink UE information reported independently, sl-DestinationIdentity represents the ID of the destination address corresponding to the first sidelink UE information, sl-RelayType represents the relay type of the relay service, sl-UeType represents the type of the terminal device, sl-TxInterestedFreqList represents the list of interested frequency points of the destination addresses corresponding to the first sidelink UE information, and sl-TypeTxSyncList represents the list of synchronization reference information of each frequency point in the list of frequency points.

In some implementation, when the terminal device reports the first sidelink UE information and the second sidelink UE information, the first sidelink UE information may be carried in the second sidelink UE information, but is not limited thereto.

For example, the first sidelink UE information and the second sidelink UE information reported by the terminal device following the following form.

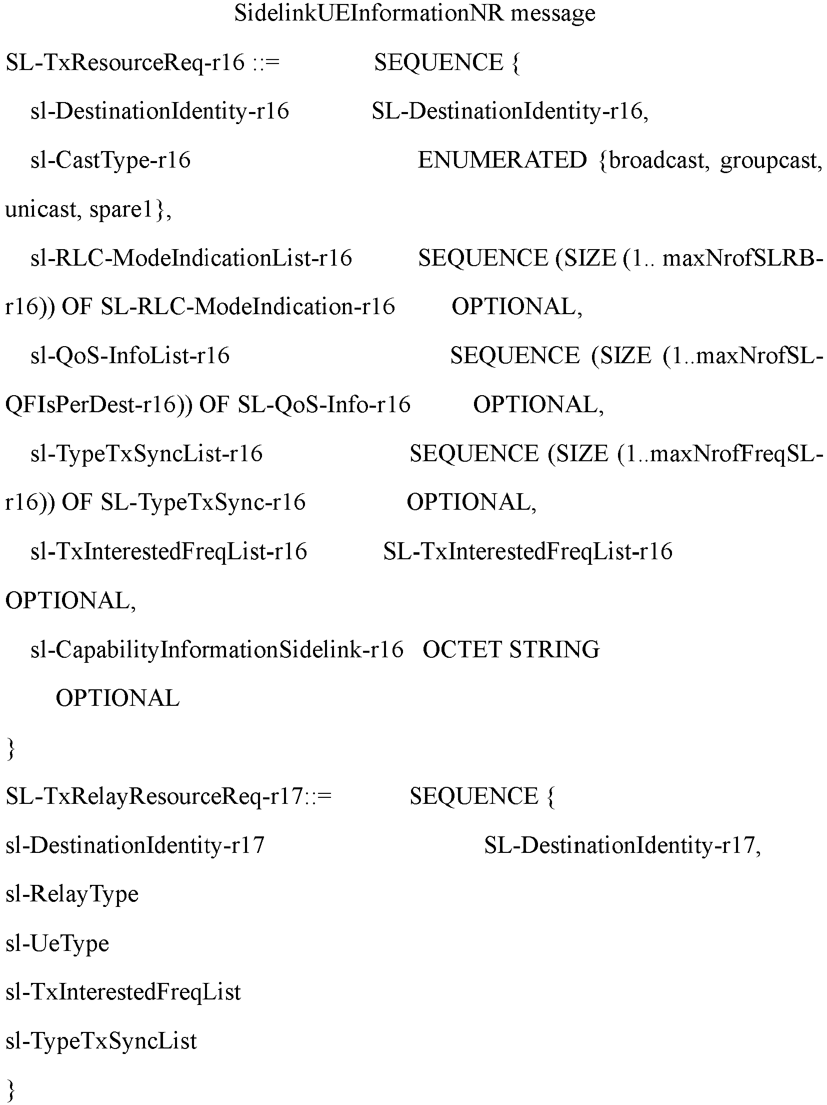

SL-TxResourceReq represents the second sidelink UE information, and the explanation of each parameter in SL-TxResourceReq may refer to the existing standard. SL-TxRelayResourceReq represents the first sidelink UE information, and the explanation of each parameter in the SL-TxRelayResourceReq may refer to the above contents, which is not repeated in the present disclosure.

It should be understood that, in the embodiments of the present disclosure, the configuration of the RB and/or the transmission resource of at least one relay service may be determined by referring to the process in which the network device obtains the configuration of the RB and/or the transmission resource of the sidelink service according to the sidelink UE information corresponding to the sidelink service, which is not repeated in the present disclosure.

In view of above, in the embodiments of the present disclosure, the sidelink UE information corresponding to the relay service is provided, so that the network device can obtain the configuration of the RB and/or the transmission resource corresponding to the relay service according to the sidelink UE information. In addition, in the prior art, for the relay service, the terminal device is configured with the RB by the network device before the sidelink UE information is reported, which is inconsistent with the existing standard that the RB is obtained for the sidelink service after the sidelink UE information is obtained. The purpose of consistency with the existing standard can be achieved by the technical solutions provided by the present disclosure.

Further, based on the existing technical solution, in some situations, such as when the remote terminal is switched from the air interface link to the relay link, the terminal device will not report the sidelink UE information, which results in subsequently, the relay terminal unable to report the BSR according to the index of the destination address, thus unable to request the transmission resource. However, in the present disclosure, when the first condition, the second condition or the third condition are met, the terminal device can report the first sidelink UE information, for example, when the link of the remote terminal is switched, the terminal device can report the first sidelink UE information, so that the relay terminal can then report the BSR according to the index of the destination address, the transmission resource can be requested, and the reliability of the system can be improved.

Furthermore, when the terminal device needs to report the first sidelink UE information and the second sidelink UE information, the embodiments of the present disclosure propose that the terminal device and the network device need to use the same preset rule to determine the index of the destination address, so as to ensure that the corresponding relationship among the indexes of the destination addresses, the destination addresses and the frequency points determined at both ends of the terminal device and the network device is consistent, thereby improving the reliability of the system.

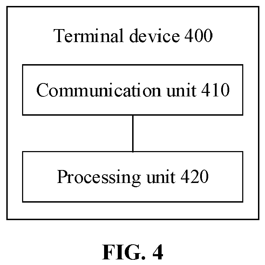

FIG. 4 illustrates a schematic block diagram of a terminal device 400 according to the embodiments of the present disclosure. As illustrated in FIG. 4, the terminal device is a remote terminal or a relay terminal. The terminal device includes a communication unit 410. The communication unit 410 is configured to report the first sidelink UE information corresponding to at least one relay service to a network device. The first sidelink UE information is configured to obtain a configuration of a RB and/or a transmission resource of the at least one relay service.

In some implementations, in a case that the terminal device is the remote terminal, the communication unit 410 is specifically configured to report the first sidelink UE information to the network device in a case that the remote terminal meets the first condition. The first condition includes any one of the following.
The remote terminal receives in a layer 2 relay a Radio Resource Control (RRC) reconfiguration message forwarded by the relay terminal.
The remote terminal establishs a connection with a relay terminal in a layer 3 relay.

In some implementations, in a case that the terminal device is the relay terminal, the communication unit 410 is specifically configured to report the first sidelink UE information to the network device in a case that the relay terminal meetss the second condition. The second condition includes any one of the following.
The relay terminal receives a sidelink request transmitted by the remote terminal, the sidelink request being configured to request an establishment of a sidelink between the remote terminal and the relay terminal.
The relay terminal receives in a layer 2 relay an indication message transmitted by the network device, the indication message being configured to instruct the relay terminal to process the at least one relay service.

In some implementations, the communication unit 410 is specifically configured to report the first sidelink UE information to the network device in a case that the third condition is met. The third condition includes any one of the following.
A link between the remote terminal and the network device is switched from an air interface link to a relay link relayed through the relay terminal.
A sidelink between the terminal device and a peer terminal is established successfully.
A sidelink between the terminal device and a peer terminal is resumed.
An interest of the terminal device is changed.
Information of a QoS flow corresponding to a relay service in the at least one relay service is changed.
Capability information of a peer terminal is received from the peer terminal.
A RLC mode of the peer terminal is changed.
A SIB used for providing a sidelink configuration isg changed.
A failure is occurred in a sidelink.
A RRC reconfiguration failure is occurred in a sidelink.

In some implementations, the communication unit 410 is further configured to report second sidelink UE information corresponding to at least one sidelink service to the network device. The second sidelink UE information is configured to obtain a configuration of a RB and/or a transmission resource of the at least one sidelink service.

In some implementations, the first sidelink UE information is carried in the second sidelink UE information.

In some implementations, the terminal device further includes a processing unit 420. The processing unit 420 is configured to determine an index of at least one first destination address according to a preset rule. The at least one first destination address is composed of destination addresses respectively corresponding to the first sidelink UE information and the second sidelink UE information. The communication unit 410 is further configured to transmit a BSR to the network device for requesting an acquisition of a transmission resource corresponding to at least one second destination address. The BSR includes an index of the at least one second destination address.

In some implementations, the preset rule includes any one of the following:
determining the index of the at least one first destination address follow an order of the first sidelink UE information and the second sidelink UE information successively;
determining the index of the at least one first destination address follow an order of the second sidelink UE information and the first sidelink UE information successively; or
determining, according to an first index range, an index of destination address corresponding to the first sidelink UE information, and determining, according to an second index range, an index of destination address corresponding to the second sidelink UE information, the first index range being an index range of the destination address corresponding to the first sidelink UE information, and the second index range being an index range of the destination address corresponding to the second sidelink UE information.

In some implementations, the first index range and the second index range are configured by the network device or the first index range and the second index range are predefined.

In some implementations, the first sidelink UE information includes at least one of the following:
an ID of destination address corresponding to the first sidelink UE information;
a relay type of each of the at least one relay service;
a type of the terminal device;
an interested frequency point list of the destination address corresponding to the first sidelink UE information; or
a list of synchronization reference information of various frequency points in the frequency point list.

In some implementations, the ID of the destination address is an ID of an terminal.

In some implementations, the ID of the peer terminal is any one of following: a source ID of the peer terminal, a temporary ID of the peer terminal, or a Cell-Radio Network Temporary Identity (C-RNTI) of the peer terminal.

In some implementations, the relay type of each of the at least one relay service is a layer 2 relay type or a layer 3 relay type.

In some implementations, the type of the terminal device is a remote terminal or a relay terminal.

In some implementations, in a case that the terminal device is the relay terminal and the relay terminal is configured with a common search space for detecting a paging message of the remote terminal, the first sidelink UE information further includes an ID of the remote terminal.

In some implementations, in the case that the terminal device is the relay terminal, the communication unit 410 is further configured to receive the ID of the remote terminal transmitted by the remote terminal.

In some implementations, the ID of the remote terminal is carried in any one of following: a RRC signaling, a MAC CE, or SCI.

In some implementations, the ID of the remote terminal includes a 5G-S-TMSI and/or an I-RNTI of the remote terminal.

Alternatively, in some embodiments, the above communication unit may be a communication interface, a transceiver, an input/output interface of a communication chip or a system-on-chip, and the processing unit may be one or more processors.

It should be understood that the terminal device 400 in the embodiment of the present disclosure may correspond to the terminal device in the method embodiments, and the above and other operations and/or functions of the various units in the terminal device 400 are used to respectively implement the corresponding flows of the terminal device in the method embodiments, which are not repeated in the present disclosure for the sake of brevity.

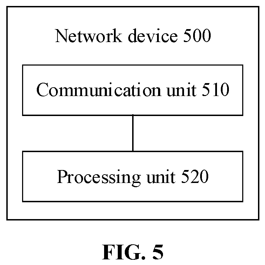

FIG. 5 illustrates a schematic block diagram of a network device 500 according to the embodiment of the present disclosure. As illustrated in FIG. 5, the network device 500 includes a communication unit 510 and a processing unit 520. The communication unit 510 is configured to receive first sidelink UE information corresponding to at least one relay service transmitted by a terminal device. The processing unit 520 is configured to obtain a configuration of a RB and/or a transmission resource of the at least one relay service according to the first sidelink UE information.

In some implementations, the communication unit 510 is further configured to receive the second sidelink UE information corresponding to at least one sidelink service transmitted by the terminal device. The processing unit 520 is further configured to obtain a configuration of a BR and/or a transmission resource of the at least one sidelink service according to the second sidelink UE information.

In some implementations, the first sidelink UE information is carried in the second sidelink UE information.

In some implementations, the processing unit 520 is further configured to determine an index of at least one first destination address according to a preset rule, and receive a BSR transmitted by the terminal device for requesting an acquisition of a transmission resource corresponding to at least one second destination address. The at least one first destination address is composed of destination addresses respectively corresponding to the first sidelink UE information and the second sidelink UE information, and the BSR includes an index of the at least one second destination address.

In some implementations, the preset rule includes any one of the following:
determining the index of the at least one first destination address follow an order of the first sidelink UE information and the second sidelink UE information successively;
determining the index of the at least one first destination address follow an order of the second sidelink UE information and the first sidelink UE information successively; or
determining, according to an first index range, an index of destination address corresponding to the first sidelink UE information, and determining, according to an second index range, an index of destination address corresponding to the second sidelink UE information, the first index range being an index range of the destination address corresponding to the first sidelink UE information, and the second index range being an index range of the destination address corresponding to the second sidelink UE information.

In some implementations, the first index range and the second index range are configured by the network device or the first index range and the second index range are predefined.

In some implementations, the first sidelink UE information includes at least one of the following:
an ID of at least one destination address corresponding to the first sidelink UE information;
a relay type of each of the at least one relay service;
a type of the terminal device;
an interested frequency point list of the destination address corresponding to the first sidelink UE information; or
a list of synchronization reference information of various frequency points in the frequency point list.

In some implementations, the ID of the destination address is an ID of peer terminal.

In some implementations, the ID of the peer terminal is any one of following: a source ID of the peer terminal, a temporary ID of the peer terminal, or a C-RNTI of the peer terminal.

In some implementations, the relay type of each of the at least one relay service is a layer 2 relay type or a layer 3 relay type.

In some implementations, the type of the terminal device is a remote terminal or a relay terminal.

In some implementations, in a case that the terminal device is the relay terminal and the relay terminal is configured with a common search space for detecting a paging message of the remote terminal, the first sidelink UE information further includes an ID of the remote terminal.

In some implementations, the ID of the remote terminal includes a 5G-S-TMSI and/or an I-RNTI of the remote terminal.

Alternatively, in some embodiments, the above communication unit may be a communication interface, a transceiver, an input/output interface of a communication chip or a system-on-chip, and the above processing unit may be one or more processors.

It should be understood that the network device 500 in the embodiment of the present disclosure may correspond to the network device in the method embodiments, and the above and other operations and/or functions of the various units in the network device 500 are used to implement the corresponding flows of the network device in the method embodiments, which are not repeated in the present disclosure for the sake of brevity.

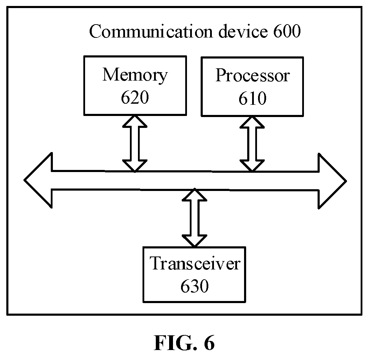

FIG. 6 is a schematic structural diagram of a communication device 600 provided by the embodiment of the present disclosure. The communication device 600 illustrated in FIG. 6 includes a processor 610. The processor 610 may invoke and run computer programs from a memory to implement the methods in the embodiments of the present disclosure.

Alternatively, as illustrated in FIG. 6, the communication device 600 may further include a memory 620. The processor 610 may invoke and run computer programs from the memory 620 to implement the methods in embodiments of the present disclosure.

The memory 620 may be a separate device independent of the processor 610 or may be integrated in the processor 610.

Alternatively, as illustrated in FIG. 6, the communication device 600 may further include a transceiver 630. The processor 610 may control the transceiver 630 to communicate with other devices, and in particular may transmit or receive information or data transmitted by other devices.

The transceiver 630 may include a transmitter and a receiver. The transceiver 630 may further include antennas, and the number of antennas may be one or more.

Alternatively, the communication device 600 may be specifically a network device of the embodiments of the present disclosure, and the communication device 600 may implement corresponding processes implemented by the network device in the various methods of the embodiments of the present disclosure, which will not be repeated in the present disclosure for the sake of brevity.

Alternatively, the communication device 600 may be specifically a terminal device of the embodiments of the present disclosure, and the communication device 600 may implement corresponding processes implemented by the terminal device in the various methods of the embodiments of the present disclosure, which will not be repeated in the present disclosure for the sake of brevity.

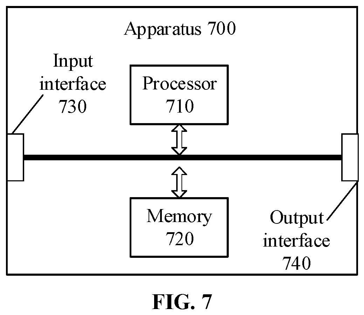

FIG. 7 is a schematic structural diagram of an apparatus according to the embodiment of the present disclosure. The apparatus 700 illustrated in FIG. 7 includes a processor 710. The processor 710 may invoke and run computer programs from a memory to implement the methods in the embodiments of the present disclosure.

Alternatively, as illustrated in FIG. 7, the apparatus 700 may further include a memory 720. The processor 710 may invoke and run computer programs from the memory 720 to implement the methods in the embodiments of the present disclosure.

The memory 720 may be a separate device independent of the processor 710 or may be integrated in the processor 710.

Alternatively, the apparatus 700 may further include an input interface 730. The processor 710 may control the input interface 730 to communicate with other devices or chips, and in particular may obtain information or data transmitted by other devices or chips.

Alternatively, the apparatus 700 may further include an output interface 740. The processor 710 may control the output interface 740 to communicate with other devices or chips, and in particular may output information or data to other devices or chips.

Alternatively, the apparatus may be applied to the network device in the embodiments of the present disclosure, and the apparatus may implement the corresponding processes implemented by the network device in the various methods of the embodiments of the present disclosure, which will not be repeated in the present disclosure for the sake of brevity.

Alternatively, the apparatus may be applied to the terminal device in the embodiments of the present disclosure, and the apparatus may implement the corresponding processes implemented by the terminal device in the various methods of the embodiments of the present disclosure, which will not be repeated in the present disclosure for the sake of brevity.

Alternatively, the apparatus mentioned in the embodiment of the present disclosure may also be a chip. For example, it may be a system level chip, a system chip, a chip system or a system-on-chip.

It should be understood that the processor in the embodiments of the present disclosure may be an integrated circuit chip having signal processing capability. In implementation, the various operations in the above method embodiments may be completed by integrated logic circuitry of hardware in the processor or instructions in the form of software. The above processor may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure may be directly embodied as the execution of the hardware decoding processor or the combined execution of the hardware and software modules in the decoding processor. The software module may be located in a Random Access Memory (RAM), a flash memory, a Read-only Memory (ROM), a Programmable ROM (PROM) or an Electrically Erasable PROM (EEPOM), a register and other storage medium mature in the art. The storage medium is located in the memory, and the processor reads the information in the memory and completes the operations of the methods in combination with its hardware.

It can be understood that the memory in embodiments of the present disclosure may be a volatile memory, a non-volatile memory or may include both volatile and non-volatile memory. The non-volatile memory may be a ROM, a PROM, an Erasable PROM (EPROM), an Electrically Erasable EPROM (EEPROM), or a flash memory. The volatile memory may be a RAM which serves as an external cache. By way of illustration, but not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a synchlink DRAM (SLDRAM), and a Direct Rambus RAM (DR RAM). It should be noted that the memory of the systems and methods described herein is intended to include but not limited to these and any other suitable types of memory.

It should be understood that the memory described above is exemplary, but not limiting. For example, the memory in embodiments of the present disclosure may also be a SRAM, a DRAM, a SDRAM, a DDR SDRAM, an ESDRAM, a SLDRAM, a DR RAM, etc. That is, the memory in embodiments of the present disclosure is intended to include but not limited to these and any other suitable types of memory.

The embodiment of the present disclosure further provides a computer readable storage medium for storing computer programs.

Alternatively, the computer readable storage medium may be applied to a network device or a base station in the embodiments of the present disclosure, and the computer programs cause a computer to perform corresponding processes implemented by the network device or the base station in the various methods of the embodiments of the present disclosure, which will not be repeated in the present disclosure for the sake of brevity.

Alternatively, the computer readable storage medium may be applied to the mobile terminal/terminal device in the embodiments of the present disclosure, and the computer programs cause the computer to perform corresponding processes implemented by the mobile terminal/terminal device in the various methods of the embodiments of the present disclosure, which will not be repeated in the present disclosure for the sake of brevity.

The embodiment of the present disclosure further provides a computer program product including computer program instructions.

Alternatively, the computer program product may be applied to the network device or the base station in the embodiments of the present disclosure, and the computer program instructions cause a computer to perform corresponding processes implemented by the network device or the base station in the various methods of the embodiments of the present disclosure, which will not be repeated in the present disclosure for the sake of brevity.

Alternatively, the computer program product may be applied to the mobile terminal/terminal device in the embodiments of the present disclosure, and the computer program instructions cause the computer to perform the corresponding processes implemented by the mobile terminal/terminal device in the various methods of the embodiments of the present disclosure, which will not be repeated in the present disclosure for the sake of brevity.

The embodiment of the present disclosure further provides a computer program.

Alternatively, the computer program may be applied to the network device or the base station in the embodiments of the present disclosure, and when the computer program is run on the computer, the computer performs the corresponding processes implemented by the network device or the base station in the various methods of the embodiments of the present disclosure, which will not be repeated in the present disclosure for the sake of brevity.

Alternatively, the computer program may be applied to the mobile terminal/terminal device in the embodiments of the present disclosure, and when the computer program is run on the computer, the computer performs the corresponding processes implemented by the mobile terminal/terminal device in the various methods of the embodiments of the present disclosure, which will not be repeated in the present disclosure for the sake of brevity.

Those of ordinary skill in the art will appreciate that the various example units and algorithm steps described in combination with the embodiments disclosed herein can be implemented in electronic hardware or a combination of computer software and electronic hardware. Whether these functions are performed in hardware or software depends on the specific application and design constraints of the technical solutions. Skilled artisans may use different methods for each particular application to implement the described function, but such implementation should not be considered outside the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated in the present disclosure.

In several embodiments provided in the present disclosure, it should be understood that the disclosed systems, apparatuses and methods may be implemented in other ways. For example, the above-described embodiments of the devices are only schematic, for example, the division of the units is only a logical function division, and in practice, there may be another division manner, for example, multiple units or components may be combined or integrated into another system, or some features may be ignored or not performed. On the other hand, the coupling, direct coupling or communication connection between each other illustrated or discussed may be an indirect coupling or communication connection through some interfaces, devices or units, and may be electrical, mechanical or other form.

The units illustrated as separate elements may or may not be physically separated, and the components displayed as units may or may not be physical units, i.e. may be located in one place, or may be distributed over a plurality of network units. Part or all of the units may be selected according to the actual needs to achieve the purpose of the embodiments.

In addition, various function units in various embodiments of the present disclosure may be integrated in one processing unit, each unit may exist physically alone, or two or more units may be integrated in one unit.

The functions may be stored in a computer readable storage medium if implemented in the form of software function units and sold or used as stand-alone products. With this understanding, the technical solutions of the present disclosure in essence or part contributing to the prior art may be embodied in the form of a software product. The computer software product is stored in a storage medium, and includes instructions for causing a computer device (which may be a personal computer, a server, a network device, etc.) to perform all or part of the operations of the methods described in various embodiments of the present disclosure. The aforementioned storage medium includes a U disk, a removable hard disk, a ROM, a RAM, a magnetic disk or an optical disk and other medium capable of storing program codes.

## Claims

1. A method for wireless communication, wherein the method is performed by a terminal device, the terminal device is a remote terminal or a relay terminal, and the method comprises:
reporting (310) first sidelink user equipment, UE, information corresponding to at least one relay service to a network device,
wherein the first sidelink UE information is configured to obtain a configuration of a Radio Bearer, RB, and/or a transmission resource of the at least one relay service,
**characterized in that** the first sidelink UE information comprises a relay type of each of the at least one relay service, wherein the relay type of each of the at least one relay service is a layer 2 relay type or a layer 3 relay type.

2. The method of claim 1, wherein reporting the first sidelink UE information corresponding to the at least one relay service to the network device comprises:
in a case that a third condition is met, reporting the first sidelink UE information to the network device, wherein the third condition comprises any one of following:
a sidelink between the terminal device and a peer terminal being established successfully;
a sidelink between the terminal device and a peer terminal being resumed;
an interest of the terminal device being changed;
information of a Quality of Service, QoS, flow corresponding to a relay service in the at least one relay service being changed;
capability information of a peer terminal being received from the peer terminal;
a Radio Link Control, RLC, mode of a peer terminal being changed; or
a System Information Block ,SIB, used for providing a sidelink configuration being changed.

3. The method of claim 1 or 2, further comprising:
reporting second sidelink UE information corresponding to at least one sidelink service to the network device,
wherein the second sidelink UE information is configured to obtain a configuration of an RB and/or a transmission resource of the at least one sidelink service.

4. The method of claim 3, further comprising:
determining an index of at least one first destination address according to a preset rule, wherein the at least one first destination address is composed of destination addresses respectively corresponding to the first sidelink UE information and the second sidelink UE information; and
transmitting a Buffer Status Report, BSR, to the network device for requesting an acquisition of a transmission resource corresponding to at least one second destination address, wherein the BSR comprises an index of the at least one second destination address.

5. A method for wireless communication, performed by to a network device, comprising:
receiving first sidelink user equipment, UE, information corresponding to at least one relay service transmitted by a terminal device; and
obtaining (320) a configuration of a Radio Bearer, RB, and/or a transmission resource of the at least one relay service according to the first sidelink UE information,
**characterized in that** the first sidelink UE information comprises a relay type of each of the at least one relay service, wherein the relay type of each of the at least one relay service is a layer 2 relay type or a layer 3 relay type.

6. The method of claim 5, further comprising:
receiving second sidelink UE information corresponding to at least one sidelink service transmitted by the terminal device; and
obtaining a configuration of an RB and/or a transmission resource of the at least one sidelink service according to the second sidelink UE information.

7. The method of claim 6, further comprising:
determining an index of at least one first destination address according to a preset rule, wherein the at least one first destination address is composed of destination addresses respectively corresponding to the first sidelink UE information and the second sidelink UE information; and
receiving a Buffer Status Report, BSR, transmitted by the terminal device for requesting an acquisition of a transmission resource corresponding to at least one second destination address, wherein the BSR comprises an index of the at least one second destination address.

8. A terminal device (400), wherein the terminal device is a remote terminal or a relay terminal, and the terminal device comprises:
a communication unit (410), configured to report first sidelink user equipment, UE, information corresponding to at least one relay service to a network device,
wherein the first sidelink UE information is configured to obtain a configuration of a Radio Bearer, RB, and/or a transmission resource of the at least one relay service,
**characterized in that** the first sidelink UE information comprises a relay type of each of the at least one relay service, wherein the relay type of each of the at least one relay service is a layer 2 relay type or a layer 3 relay type.

9. The terminal device of claim 8, wherein the communication unit (410) is further configured to:
report second sidelink UE information corresponding to at least one sidelink service to the network device,
wherein the second sidelink UE information is configured to obtain a configuration of an RB and/or a transmission resource of the at least one sidelink service.

10. The terminal device of claim 9, wherein an index of at least one first destination address is determined according to a preset rule, the at least one first destination address is composed of destination addresses respectively corresponding to the first sidelink UE information and the second sidelink UE information, and the preset rule comprises:
determining the index of the at least one first destination address follow an order of the second sidelink UE information and the first sidelink UE information successively.

11. The terminal device of any one of claims 8-10, wherein the first sidelink UE information further comprises at least one of following:
an identity, ID, of destination address corresponding to the first sidelink UE information, wherein the ID of the destination address is an ID of a peer terminal;
a type of the terminal device, wherein the type of the terminal device is a remote terminal or a relay terminal;
an interested frequency point list of the destination address corresponding to the first sidelink UE information; or
a list of synchronization reference information of various frequency points in the frequency point list.

12. A network device (500) comprising:
a communication unit (510), configured to receive first sidelink user equipment, UE, information corresponding to at least one relay service transmitted by a terminal device; and
a processing unit (520), configured to obtain a configuration of a Radio Bearer, RB, and/or a transmission resource of the at least one relay service according to the first sidelink UE information,
**characterized in that** the first sidelink UE information comprises a relay type of each of the at least one relay service, wherein the relay type of each of the at least one relay service is a layer 2 relay type or a layer 3 relay type.

13. The network device of claim 12, wherein,
the communication unit (510) is further configured to receive second sidelink UE information corresponding to at least one sidelink service transmitted by the terminal device; and
the processing unit (520) is further configured to obtain a configuration of an RB and/or a transmission resource of the at least one sidelink service according to the second sidelink UE information.

14. The network device of claim 13, wherein an index of at least one first destination address is determined according to a preset rule, the at least one first destination address is composed of destination addresses respectively corresponding to the first sidelink UE information and the second sidelink UE information, and the preset rule comprises:
determining the index of the at least one first destination address follow an order of the second sidelink UE information and the first sidelink UE information successively.

15. The network device of any one of claims 12-14, wherein the first sidelink UE information further comprises at least one of following:
an identity, ID, of at least one destination address corresponding to the first sidelink UE information, wherein the ID of the destination address is an ID of a peer terminal;
a type of the terminal device, wherein the type of the terminal device is a remote terminal or a relay terminal;
an interested frequency point list of the destination address corresponding to the first sidelink UE information; or
a list of synchronization reference information of various frequency points in the frequency point list.

## Patentansprüche

1. Verfahren zur drahtlosen Kommunikation, wobei das Verfahren durch eine Endgerätvorrichtung ausgeführt wird, wobei die Endgerätvorrichtung ein entferntes Endgerät oder ein Weiterleitungsendgerät ist, wobei das Verfahren Folgendes umfasst:
Melden (310) erster Sidelink-Anwendergerät-Informationen, Sidelink-UE-Informationen, die wenigstens einem Weiterleitungsdienst entsprechen, an eine Netzvorrichtung,
wobei die ersten Sidelink-UE-Informationen konfiguriert sind, eine Konfiguration eines Funkträgers, RB, und/oder eines Übertragungsbetriebsmittels des wenigsten einen Weiterleitungsdienstes zu erhalten,
**dadurch gekennzeichnet, dass** die ersten Sidelink-UE-Informationen einen Weiterleitungstyp jedes des wenigstens einen Weiterleitungsdienstes umfassen, wobei der Weiterleitungstyp jedes des wenigstens einen Weiterleitungsdienstes ein Schicht-2-Weiterleitungstyp oder ein Schicht-3-Weiterleitungstyp ist.

2. Verfahren nach Anspruch 1, wobei das Melden der ersten Sidelink-UE-Informationen, die dem wenigstens einen Weiterleitungstyp entsprechen, an die Netzvorrichtung Folgendes umfasst:
in einem Fall, in dem eine dritte Bedingung erfüllt ist, Melden der ersten Sidelink-UE-Informationen an die Netzvorrichtung, wobei die dritte Bedingung eine der Folgenden umfasst:
ein Sidelink zwischen der Endgerätvorrichtung und einem Peer-Endgerät ist erfolgreich aufgebaut worden;
ein Sidelink zwischen der Endgerätvorrichtung und einem Peer-Endgerät ist wiederaufgenommen worden;
ein Interesse der Endgerätvorrichtung ist geändert worden;
die Informationen einer Dienstgüteströmung (QoS-Strömung), die einem Weiterleitungsdienst in dem wenigstens einen Weiterleitungsdienst entsprechen, sind geändert worden;
von dem Peer-Endgerät sind Fähigkeitsinformationen eines Peer-Endgeräts empfangen worden;
eine Funkverbindungssteuerbetriebsart, RLC-Betriebsart, eines Peer-Endgeräts ist geändert worden; oder
ein Systeminformationsblock, SIB, der zum Bereitstellen einer Sidelink-Konfiguration verwendet wird, ist geändert worden.

3. Verfahren nach Anspruch 1 oder 2, das ferner Folgendes umfasst:
Melden zweiter Sidelink-UE-Informationen, die wenigstens einem Sidelink-Dienst entsprechen, an die Netzvorrichtung,
wobei die zweiten Sidelink-UE-Informationen konfiguriert sind, eine Konfiguration eines RB und/oder eines Übertragungsbetriebsmittels des wenigsten einen Sidelink-Dienstes zu erhalten.

4. Verfahren nach Anspruch 3, das ferner Folgendes umfasst:
Bestimmen eines Indexes wenigstens einer ersten Zieladresse gemäß einer vorgegebenen Regel, wobei die wenigstens eine erste Zieladresse aus Zieladressen zusammengesetzt ist, die jeweils den ersten Sidelink-UE-Informationen und den zweiten Sidelink-UE-Informationen entsprechen; und
Übertragen einer Pufferstatusmeldung, BSR, zu der Netzvorrichtung zum Anfordern einer Erfassung eines Übertragungsbetriebsmittels, das wenigstens einer zweiten Zieladresse entspricht, wobei die BSR einen Index der wenigstens einen zweiten Zieladresse umfasst.

5. Verfahren zur drahtlosen Kommunikation, das durch eine Netzvorrichtung ausgeführt wird, das Folgendes umfasst:
Empfangen erster Sidelink-Anwendergerät-Informationen, Sidelink-UE-Informationen, die wenigstens einem Weiterleitungsdienst entsprechen, die durch eine Endgerätvorrichtung übertragen werden; und
Erhalten (320) einer Konfiguration eines Funkträgers, RB, und/oder eines Übertragungsbetriebsmittels des wenigsten einen Weiterleitungsdienstes gemäß den ersten Sidelink-UE-Informationen,
**dadurch gekennzeichnet, dass** die ersten Sidelink-UE-Informationen einen Weiterleitungstyp jedes des wenigstens einen Weiterleitungsdienstes umfassen, wobei der Weiterleitungstyp jedes des wenigstens einen Weiterleitungsdienstes ein Schicht-2-Weiterleitungstyp oder ein Schicht-3-Weiterleitungstyp ist.

6. Verfahren nach Anspruch 5, das ferner Folgendes umfasst:
Empfangen zweiter Sidelink-UE-Informationen, die wenigstens einem Sidelink-Dienst entsprechen, die durch die Endgerätvorrichtung übertragen werden; und
Erhalten einer Konfiguration eines RB und/oder eines Übertragungsbetriebsmittels des wenigstens einen Sidelink-Dienstes gemäß den zweiten Sidelink-UE-Informationen.

7. Verfahren nach Anspruch 6, das ferner Folgendes umfasst:
Bestimmen eines Indexes wenigstens einer ersten Zieladresse gemäß einer vorgegebenen Regel, wobei die wenigstens eine erste Zieladresse aus Zieladressen zusammengesetzt ist, die jeweils den ersten Sidelink-UE-Informationen und den zweiten Sidelink-UE-Informationen entsprechen; und
Empfangen einer Pufferstatusmeldung, BSR, die durch die Netzvorrichtung übertragen wird, zum Anfordern einer Erfassung eines Übertragungsbetriebsmittels, das wenigstens einer zweiten Zieladresse entspricht, wobei die BSR einen Index der wenigstens einen zweiten Zieladresse umfasst.

8. Endgerätvorrichtung (400), wobei die Endgerätvorrichtung ein entferntes Endgerät oder ein Weiterleitungsendgerät ist, wobei die Endgerätvorrichtung Folgendes umfasst:
eine Kommunikationseinheit (410), die konfiguriert ist, erste Sidelink-Anwendergerät-Informationen, Sidelink-UE-Informationen, die wenigstens einem Weiterleitungsdienst entsprechen, an eine Netzvorrichtung zu melden,
wobei die ersten Sidelink-UE-Informationen konfiguriert sind, eine Konfiguration eines Funkträgers, RB, und/oder eines Übertragungsbetriebsmittels des wenigsten einen Weiterleitungsdienstes zu erhalten,
**dadurch gekennzeichnet, dass** die ersten Sidelink-UE-Informationen einen Weiterleitungstyp jedes des wenigstens einen Weiterleitungsdienstes umfassen, wobei der Weiterleitungstyp jedes des wenigstens einen Weiterleitungsdienstes ein Schicht-2-Weiterleitungstyp oder ein Schicht-3-Weiterleitungstyp ist.

9. Endgerätvorrichtung nach Anspruch 8, wobei die Kommunikationseinheit (410) ferner konfiguriert ist:
zweite Sidelink-UE-Informationen, die wenigstens einem Sidelink-Dienst entsprechen, an die Netzvorrichtung zu melden,
wobei die zweiten Sidelink-UE-Informationen konfiguriert sind, eine Konfiguration eines RB und/oder eines Übertragungsbetriebsmittels des wenigsten einen Sidelink-Dienstes zu erhalten.

10. Endgerätvorrichtung nach Anspruch 9, wobei ein Index wenigstens einer ersten Zieladresse gemäß einer vorgegebenen Regel bestimmt wird, wobei die wenigstens eine erste Zieladresse aus Zieladressen zusammengesetzt ist, die jeweils den ersten Sidelink-UE-Informationen und den zweiten Sidelink-UE-Informationen entsprechen, wobei die vorgegebene Regel Folgendes umfasst:
Bestimmen des Indexes der wenigstens einen Zieladresse einer Reihenfolge der zweiten Sidelink-UE-Informationen und der ersten Sidelink-UE-Informationen nacheinander folgend.

11. Endgerätvorrichtung nach einem der Ansprüche 8-10, wobei die ersten Sidelink-UE-Informationen ferner wenigstens eines des Folgenden umfassen:
eine Identität, ID, der Zieladresse, die den ersten Sidelink-UE-Informationen entspricht, wobei die ID der Zieladresse eine ID eines Peer-Endgeräts ist;
einen Typ der Endgerätvorrichtung, wobei der Typ der Endgerätvorrichtung ein entferntes Endgerät oder ein Weiterleitungsendgerät ist;
eine Liste interessierter Frequenzpunkte der Zieladresse, die den ersten Sidelink-UE-Informationen entspricht; oder
eine Liste von Synchronisationsreferenzinformationen verschiedener Frequenzpunkte in der Liste der Frequenzpunkte.

12. Netzvorrichtung (500), die Folgendes umfasst:
eine Kommunikationseinheit (510), die konfiguriert ist, erste Sidelink-Anwendergerät-Informationen, Sidelink-UE-Informationen, die wenigstens einem Weiterleitungsdienst entsprechen, die durch eine Endgerätvorrichtung übertragen werden, zu empfangen; und
eine Verarbeitungseinheit (520), die konfiguriert ist, eine Konfiguration eines Funkträgers, RB, und/oder eines Übertragungsbetriebsmittels des wenigsten einen Weiterleitungsdienstes gemäß den ersten Sidelink-UE-Informationen zu erhalten,
**dadurch gekennzeichnet, dass** die ersten Sidelink-UE-Informationen einen Weiterleitungstyp jedes des wenigstens einen Weiterleitungsdienstes umfassen, wobei der Weiterleitungstyp jedes des wenigstens einen Weiterleitungsdienstes ein Schicht-2-Weiterleitungstyp oder ein Schicht-3-Weiterleitungstyp ist.

13. Netzvorrichtung nach Anspruch 12, wobei
die Kommunikationseinheit (510) ferner konfiguriert ist, zweite Sidelink-UE-Informationen, die wenigstens einem Sidelink-Dienst entsprechen, die durch die Endgerätvorrichtung übertragen werden, zu empfangen; und die Verarbeitungseinheit (520) ferner konfiguriert ist, eine Konfiguration eines RB und/oder eines Übertragungsbetriebsmittels des wenigsten einen Sidelink-Dienstes gemäß den zweiten Sidelink-UE-Informationen zu erhalten.

14. Netzvorrichtung nach Anspruch 13, wobei ein Index wenigstens einer ersten Zieladresse gemäß einer vorgegebenen Regel bestimmt wird, wobei die wenigstens eine erste Zieladresse aus Zieladressen zusammengesetzt ist, die jeweils den ersten Sidelink-UE-Informationen und den zweiten Sidelink-UE-Informationen entsprechen, wobei die vorgegebene Regel Folgendes umfasst:
Bestimmen des Indexes der wenigstens einen Zieladresse einer Reihenfolge der zweiten Sidelink-UE-Informationen und der ersten Sidelink-UE-Informationen nacheinander folgend.

15. Netzvorrichtung nach einem der Ansprüche 12-14, wobei die ersten Sidelink-UE-Informationen ferner wenigstens eines des Folgenden umfassen:
eine Identität, ID, wenigstens einer Zieladresse, die den ersten Sidelink-UE-Informationen entspricht, wobei die ID der Zieladresse eine ID eines Peer-Endgeräts ist;
einen Typ der Endgerätvorrichtung, wobei der Typ der Endgerätvorrichtung ein entferntes Endgerät oder ein Weiterleitungsendgerät ist;
eine Liste interessierter Frequenzpunkte der Zieladresse, die den ersten Sidelink-UE-Informationen entspricht; oder
eine Liste von Synchronisationsreferenzinformationen verschiedener Frequenzpunkte in der Liste der Frequenzpunkte.

## Revendications

1. Procédé de communication sans fil, dans lequel le procédé est exécuté par un dispositif terminal, le dispositif terminal est un terminal à distance ou un terminal relais, et le procédé comprend :
le signalement (310) de premières informations d'équipement utilisateur, UE, de liaison latérale correspondant à au moins un service de relais à un dispositif de réseau,
dans lequel les premières informations d'UE de liaison latérale sont configurées pour obtenir une configuration d'une porteuse radio, RB, et/ou d'une ressource de transmission du ou des services de relais,
**caractérisé en ce que** les premières informations d'UE de liaison latérale comprennent un type de relais de chacun du ou des services de relais, dans lequel le type de relais de chacun du ou des services de relais est un type de relais de couche 2 ou un type de relais de couche 3.

2. Procédé selon la revendication 1, dans lequel le signalement des premières informations d'UE de liaison latérale correspondant au ou aux services de relais au dispositif de réseau comprend :
dans un cas dans lequel une troisième condition est satisfaite, le signalement des premières informations d'UE de liaison latérale au dispositif de réseau, dans lequel la troisième condition comprend l'une quelconque des conditions suivantes :
une liaison latérale est établie avec succès entre le dispositif terminal et un terminal pair ;
une liaison latérale est reprise entre le dispositif terminal et un dispositif pair ;
un intérêt du dispositif terminal est modifié ;
des informations d'un flux de qualité de service, QoS, correspondant à un service de relais parmi le ou les services de relais sont modifiées ;
des informations de capacité d'un terminal pair sont reçues depuis le terminal pair ;
un mode de commande de liaison radio, RLC, d'un terminal pair est modifié ; ou
un bloc d'informations système, SIB, utilisé pour fournir une configuration de liaison latérale est modifié.

3. Procédé selon la revendication 1 ou 2, comprenant en outre :
le signalement de secondes informations d'UE de liaison latérale correspondant à au moins un service de liaison latérale au dispositif de réseau,
dans lequel les secondes informations d'UE de liaison latérale sont configurées pour obtenir une configuration d'une RB et/ou d'une ressource de transmission du ou des services de liaison latérale.

4. Procédé selon la revendication 3, comprenant en outre :
la détermination d'un index d'au moins une première adresse de destination en fonction d'une règle prédéfinie, dans lequel la ou les adresses de destination sont constituées d'adresses de destination correspondant respectivement aux premières informations d'UE de liaison latérale et aux secondes informations d'UE de liaison latérale ; et
la transmission d'un rapport d'état de tampon, BSR, au dispositif de réseau pour demander une acquisition d'une ressource de transmission correspondant à au moins une seconde adresse de destination, dans lequel le BSR comprend un index de la ou des secondes adresses de destination.

5. Procédé de communication sans fil, exécuté par un dispositif de réseau, comprenant :
la réception de premières informations d'équipement utilisateur, UE, de liaison latérale correspondant à au moins un service de relais transmis par un dispositif terminal ; et
l'obtention (320) d'une configuration de porteuse radio, RB, et/ou d'une ressource de transmission du ou des services de relais en fonction des premières informations d'UE de liaison latérale,
**caractérisé en ce que** les premières informations d'UE de liaison latérale comprennent un type de relais de chacun du ou des services de relais, dans lequel le type de relais de chacun du ou des services de relais est un type de relais de couche 2 ou un type de relais de couche 3.

6. Procédé selon la revendication 5, comprenant en outre :
la réception de secondes informations d'UE de liaison latérale correspondant à au moins un service de liaison latérale transmis par le dispositif terminal ; et
l'obtention d'une configuration d'une RB et/ou d'une ressource de transmission du ou des services de relais en fonction des secondes informations d'UE de liaison latérale.

7. Procédé selon la revendication 6, comprenant en outre :
la détermination d'un index d'au moins une première adresse de destination en fonction d'une règle prédéfinie, dans lequel la ou les adresses de destination sont constituées d'adresses de destination correspondant respectivement aux premières informations d'UE de liaison latérale et aux secondes informations d'UE de liaison latérale ; et
la réception d'un rapport d'état de tampon, BSR, transmis par le dispositif terminal pour demander une acquisition d'une ressource de transmission correspondant à au moins une seconde adresse de destination, dans lequel le BSR comprend un index de la ou des secondes adresses de destination.

8. Dispositif terminal (400), dans lequel le dispositif terminal est un terminal à distance ou un terminal relais, et le dispositif terminal comprend :
une unité de communication (410), configurée pour signaler des premières informations d'équipement utilisateur, UE, de liaison latérale correspondant à au moins un service de relais à un dispositif de réseau,
dans lequel les premières informations d'UE de liaison latérale sont configurées pour obtenir une configuration d'une porteuse radio, RB, et/ou d'une ressource de transmission du ou des services de relais,
**caractérisé en ce que** les premières informations d'UE de liaison latérale comprennent un type de relais de chacun du ou des services de relais, dans lequel le type de relais de chacun du ou des services de relais est un type de relais de couche 2 ou un type de relais de couche 3.

9. Dispositif terminal selon la revendication 8, dans lequel l'unité de communication (410) est en outre configurée pour :
signaler des secondes informations d'UE de liaison latérale correspondant à au moins un service de liaison latérale au dispositif de réseau,
dans lequel les secondes informations d'UE de liaison latérale sont configurées pour obtenir une configuration d'une RB et/ou d'une ressource de transmission du ou des services de liaison latérale.

10. Dispositif terminal selon la revendication 9, dans lequel un index de la ou des premières adresses de destination est déterminé en fonction d'une règle prédéfinie, la ou les adresses de destination sont constituées d'adresses de destination correspondant respectivement aux premières informations d'UE de liaison latérale et aux secondes informations d'UE de liaison latérale, et la règle prédéfinie comprend :
la détermination de l'index de la ou des premières adresses de destination suivant un ordre des secondes informations d'UE de liaison latérale et des premières informations d'UE de liaison latérale successivement.

11. Dispositif terminal selon l'une quelconque des revendications 8 à 10, dans lequel les premières informations d'UE de liaison latérale comprennent au moins l'une des informations suivantes :
une identité, ID, d'une adresse de destination correspondant aux premières informations d'UE de liaison latérale, dans lequel l'ID de l'adresse de destination est une ID d'un terminal pair ;
un type du dispositif terminal, dans lequel le type du dispositif terminal est un terminal à distance ou un terminal relais ;
une liste de points de fréquence d'intérêt de l'adresse de destination correspondant aux premières informations d'UE de liaison latérale ; ou
une liste d'informations de référence de synchronisation de divers points de fréquence dans la liste de points de fréquence.

12. Dispositif de réseau (500) comprenant :
une unité de communication (510), configurée pour recevoir des premières informations d'équipement utilisateur, UE, de liaison latérale correspondant à au moins un service de relais transmises par un dispositif terminal ; et
une unité de traitement (520), configurée pour obtenir une configuration d'une porteuse radio, RB et/ou d'une ressource de transmission du ou des services de relais en fonction des premières informations d'UE de liaison latérale ;
**caractérisé en ce que** les premières informations d'UE de liaison latérale comprennent un type de relais de chacun du ou des services de relais, dans lequel le type de relais de chacun du ou des services de relais est un type de relais de couche 2 ou un type de relais de couche 3.

13. Dispositif de réseau selon la revendication 12, dans lequel :
l'unité de communication (510) est en outre configurée pour recevoir des secondes informations d'UE de liaison latérale correspondant à au moins un service de liaison latérale transmis par le dispositif terminal ; et
l'unité de traitement (520) est en outre configurée pour obtenir une configuration d'une porteuse radio, RB et/ou d'une ressource de transmission du ou des services de relais en fonction des secondes informations d'UE de liaison latérale.

14. Dispositif de réseau selon la revendication 13, dans lequel un index de la ou des premières adresses de destination est déterminé en fonction d'une règle prédéfinie, la ou les adresses de destination sont constituées d'adresses de destination correspondant respectivement aux premières informations d'UE de liaison latérale et aux secondes informations d'UE de liaison latérale, et la règle prédéfinie comprend :
la détermination de l'index de la ou des premières adresses de destination suivant un ordre des secondes informations d'UE de liaison latérale et des premières informations d'UE de liaison latérale successivement.

15. Dispositif de réseau selon l'une quelconque des revendications 12 à 14, dans lequel les premières informations d'UE de liaison latérale comprennent au moins l'une des informations suivantes :
une identité, ID, d'une adresse de destination correspondant aux premières informations d'UE de liaison latérale, dans lequel l'ID de l'adresse de destination est une ID d'un terminal pair ;
un type du dispositif terminal, dans lequel le type du dispositif terminal est un terminal à distance ou un terminal relais ;
une liste de points de fréquence d'intérêt de l'adresse de destination correspondant aux premières informations d'UE de liaison latérale ; ou
une liste d'informations de référence de synchronisation de divers points de fréquence dans la liste de points de fréquence.
